# FASCICULE DE BREVET EUROPEEN

(11) **EP 3 948 462 B1**
(45) Date de publication et mention de la délivrance du brevet: **03.05.2023**
(21) Numéro de dépôt: 20726206.4
(22) Date de dépôt: 16.03.2020
(51) Int. Cl.: G05B 23/02, B64F 5/60, B64D 33/00, B64D 45/00, F02C 9/00

(54) **PROCEDE ET DISPOSITIF DE SURVEILLANCE D'AU MOINS UN MOTEUR D'AERONEF**
VERFAHREN UND VORRICHTUNG ZUR ÜBERWACHUNG MINDESTENS EINES FLUGZEUGTRIEBWERKS
METHOD AND DEVICE FOR MONITORING AT LEAST ONE AIRCRAFT ENGINE

(30) Priorité: 01.04.2019 FR 1903464
(43) Date de publication de la demande: 09.02.2022
(73) Titulaire: SAFRAN AIRCRAFT ENGINES, 75015 Paris (FR)
(72) Inventeur: BONNET, Guillaume, Rémi, 77550 MOISSY-CRAMAYEL (FR); COUPARD, Josselin, Xavier, 77550 MOISSY-CRAMAYEL (FR)
(74) Mandataire: Cabinet Beau de Loménie
(86) Numéro de dépôt international: PCT/FR2020/050550
(87) Numéro de publication internationale: WO 2020/201652

(56) Documents cités:
- FR-A1- 2 971 595
- US-A1- 2016 233 948

## Description

### Technique antérieure

La présente invention appartient au domaine de l'assistance à la maintenance aéronautique. Elle concerne plus particulièrement un procédé de surveillance d'au moins un moteur d'aéronef à partir de mesures acquises lors d'une mission de vol de l'aéronef et représentatives du comportement du moteur ainsi que du contexte d'acquisition. L'invention trouve une application particulièrement avantageuse, bien que nullement limitative, dans le cadre de services de maintenance prédictive réalisées par un fabricant de moteurs d'aéronefs.

On constate aujourd'hui une mise en place systématique de services de maintenance prédictive. De cette manière, les fabricants de moteurs cherchent à anticiper au mieux des défaillances susceptibles d'affecter des moteurs équipant des aéronefs. La mise en place de ces services s'est en outre accélérée depuis l'arrivée sur le marché de l'aviation civile de contrats à l'heure de vol.

Ces services de maintenance prédictive reposent de manière essentielle sur des mesures acquises au cours d'une ou plusieurs missions de vol des aéronefs, et qui sont représentatives non seulement du comportement d'un moteur, mais également du contexte d'acquisition rencontré par ce moteur au cours. Plus particulièrement, des besoins logistiques et matériels utiles à la réalisation des services de maintenance sont proposés à partir d'une analyse desdites mesures.

A titre d'exemple, les mesures représentatives du comportement du moteur peuvent concerner différentes variables, comme une vitesse de rotation d'un arbre de turbine, une pression et / ou une température et / ou un niveau d'huile dans un circuit d'huile, un débit de carburant, une température de gaz d'échappement, etc. Les mesures représentatives du contexte d'acquisition peuvent quant à elles concerner d'autres variables, comme par exemple la météo, le pilotage, le vieillissement du moteur, le poids de l'avion, etc.

De manière conventionnelle, lesdites mesures sont acquises par des moyens d'acquisition embarqués dans un aéronef, et mises à disposition d'un dispositif récepteur au sol en possession de l'avionneur, afin d'être analysées. Cette mise à disposition s'effectue soit lors de la mission de vol, typiquement par transmission via une liaison satellite, soit après l'atterrissage par un déchargement d'une mémoire dans laquelle ont été mémorisées lesdites mesures.

Dans le cas d'anomalies détectées sur la base des mesures mises à disposition, des opérations de maintenance sont immédiatement proposées par un opérateur de maintenance. Sinon, les mesures sont archivées avec toutes les données de la flotte, un opérateur pouvant éventuellement proposer des opérations de maintenance prédictive à l'avionneur afin de corriger d'éventuels défauts non critiques, de sorte à optimiser le fonctionnement du moteur et prolonger sa durée de vie.

Une telle stratégie pour fournir les services de maintenance ne peut cependant pas être considérée comme satisfaisante. En effet, bien que les opérations de maintenance soient déterminées en partie au moyen d'informations relatives à l'état du moteur et obtenues à partir d'algorithmes dédiés, elles nécessitent encore une exploitation manuelle au sol par des opérateurs experts afin d'atteindre une pertinence et une précision requises. Une telle manière de procéder est fastidieuse et, selon la difficulté des anomalies à traiter, présente un risque que les opérations de maintenance préconisées soient communiquées tardivement, générant ainsi des retards dans la maintenance et donc l'exploitation de la flotte d'un avionneur.

En outre, ce retard peut s'accroitre en fonction de la quantité de mesures à analyser, dans la mesure où plus celle-ci est conséquente, plus la mise à disposition qui en découle est consommatrice en temps.

FR 2 971 595 décrit un procédé de surveillance d'au moins un moteur d' aéronef

### Exposé de l'invention

La présente invention a pour objectif de remédier à tout ou partie des inconvénients de l'art antérieur, notamment ceux exposés ci-avant, en proposant une solution qui permette de surveiller de manière précise au moins un moteur d'un aéronef, tout en étant moins fastidieuse et plus rapide que les solutions de l'art antérieur. Cette solution permet ainsi de fournir très rapidement des informations relatives à la santé du moteur, ainsi que des opérations de maintenance à mettre en oeuvre.

A cet effet, et selon un premier aspect, l'invention concerne un procédé de surveillance d'au moins un moteur d'aéronef, ledit procédé comportant, lors d'au moins une mission de vol de l'aéronef, une étape d'acquisition de mesures selon deux ensembles, un premier ensemble de mesures de variables endogènes représentatives du comportement du moteur, et un second ensemble de mesures de variables exogènes représentatives du contexte d'acquisition. En outre, ledit procédé comporte, lors de la mission de vol, les étapes suivantes :
- une étape de normalisation des mesures du premier ensemble par rapport aux mesures du second ensemble,
- une étape de génération d'un modèle courant représentatif de l'évolution temporelle du comportement du moteur en fonction des mesures normalisées,
- une étape de détection d'au moins une anomalie potentielle du comportement du moteur en fonction d'une comparaison du modèle courant avec un modèle de référence prédéfini représentatif du comportement du moteur dénué d'anomalie, et
- si une anomalie est détectée, une étape de génération d'un message de maintenance comportant une alerte basée sur l'anomalie détectée ainsi que des préconisations de maintenance ou des opérations de maintenance ou des ordres de services associés à ladite alerte,
- une étape de transmission du message de maintenance vers au moins un dispositif récepteur au sol,
les étapes d'acquisition, de normalisation, de génération d'un modèle courant, de détection et de génération d'un message de maintenance étant réalisées à bord de l'aéronef.

Ainsi, le procédé de surveillance réalise toutes les étapes précédant la transmission du message de maintenance à bord de l'aéronef. Une telle manière de procéder permet avantageusement de supprimer le caractère fastidieux de la génération dudit message de maintenance au sol à partir des mesures acquises. En effet, une fois le message de maintenance transmis, il ne reste plus qu'à prendre connaissance de son contenu. En conséquence, un opérateur de maintenance reçoit directement les opérations de maintenance à appliquer, annihilant ainsi complètement les délais générés dans l'art antérieur pour la mise à disposition de ces informations, ce qui in fine accélère considérablement le processus de maintenance du moteur de l'aéronef.

Les opérations de maintenance sont classiquement associées au matériel requis afin de les mettre en oeuvre. Par conséquent, un avantage supplémentaire du procédé de surveillance selon l'invention est de permettre une programmation logistique anticipée avant que l'aéronef soit immobilisé au sol, évitant ainsi toute perte inutile de temps.

Dans des modes particuliers de mise en oeuvre, le procédé de surveillance peut comporter en outre l'une ou plusieurs des caractéristiques suivantes, prises isolément ou selon toutes les combinaisons techniquement possibles.

Dans des modes particuliers de mise en oeuvre, l'étape de normalisation comporte :
- une sélection et/ou un filtrage des mesures du premier ensemble, de sorte à supprimer des mesures aberrantes situées en dehors d'intervalles respectifs prédéterminés,
- une normalisation des mesures filtrées du premier ensemble par rapport aux mesures du second ensemble.

Un tel filtrage permet avantageusement de fiabiliser les mesures du premier ensemble, et donc in fine de fiabiliser l'ensemble du procédé de surveillance.

Selon l'invention, le modèle de référence a été déterminé en fonction de M modèles courants obtenus lors de missions de vol antérieures à la mission de vol considérée et au cours desquelles aucune anomalie n'a été détectée, M étant un nombre supérieur ou égal à 1.

Dans des modes particuliers de mise en oeuvre, lorsque M est strictement supérieur à 1, le modèle de référence est déterminé en fonction d'une moyenne, d'une médiane ou d'une pondération desdits M modèles courants antérieurs.

De cette manière, il est possible de prendre avantageusement en compte le vieillissement du moteur tant que ce dernier est sain, et donc d'avoir un modèle de référence qui modélise finement l'évolution de l'état du moteur.

Dans des modes particuliers de mise en oeuvre, l'étape de détection d'au moins une anomalie potentielle comporte :
- une détermination d'une tendance d'évolution du modèle courant,
- une comparaison de la tendance d'évolution du modèle courant avec l'évolution temporelle du modèle de référence, de sorte à identifier une déviation potentielle du modèle courant avec le modèle de référence,
- une détection d'au moins une anomalie en fonction de ladite déviation potentielle.

Une telle mise en oeuvre est avantageuse car elle permet, grâce à la détermination de la tendance d'évolution du modèle courant, de détecter de potentielles futures anomalies. Autrement dit, selon de telles dispositions, le procédé s'inscrit dans un cadre de maintenance prédictive.

Dans des modes particuliers de mise en oeuvre, lorsqu'une anomalie est détectée, ledit procédé comporte, avant la génération du message de maintenance, une étape de confirmation et / ou d'isolation matérielle de ladite anomalie comprenant des échanges d'informations relatives au modèle courant entre l'aéronef et une entité au sol.

De telles interactions entre l'entité au sol, préférentiellement gestionnaire d'un opérateur de maintenance appartenant à la société fabricante du moteur ou bien encore à une société en charge de l'exploitation dudit moteur, et l'aéronef permettent de diminuer le taux de fausses détections en approfondissant l'analyse de l'anomalie détectée.

Dans des modes particuliers de mise en oeuvre, le dispositif récepteur au sol est choisi parmi au moins : un PC, un smartphone, une tablette, un drone, des lunettes de réalité augmentée.

Un tel dispositif récepteur au sol est facilement manipulable, et peut avantageusement être transporté / porté / guidé par un opérateur de maintenance sur un emplacement d'intervention. Ainsi, l'opérateur peut prendre connaissance des informations de maintenance avant que l'aéronef soit de retour de sa mission, et ainsi préparer en avance le matériel éventuellement nécessaire à l'exécution d'opérations de maintenance.

Dans des modes particuliers de mise en oeuvre, le message de maintenance est également transmis vers des moyens d'affichage du cockpit de l'aéronef.

Dans des modes particuliers de mise en oeuvre, le procédé comporte, lorsqu'une anomalie a été détectée et qu'un message comportant au moins une opération de maintenance relative à ladite anomalie a été généré, une étape d'estimation de l'impact du non suivi de ladite opération de maintenance sur la consommation de carburant du moteur.

Une telle estimation, lorsqu'elle est transmise au dispositif récepteur au sol, permet à un opérateur de maintenance de déterminer s'il faut effectivement envisager l'opération de maintenance telle que préconisée dans le message de maintenance. Autrement dit, ladite estimation constitue une assistance à la décision pour l'opérateur de maintenance.

Dans des modes particuliers de mise en oeuvre, au moins les étapes de normalisation, de génération d'un modèle courant et de détection d'au moins une anomalie potentielle sont itérées pour chaque acquisition d'une mesure d'au moins le premier ensemble.

Dans des modes particuliers de mise en oeuvre, une pluralité de missions de vol est considérée, les mesures des premier et second ensembles associées à une mission de vol étant acquises au cours d'au moins une phase prédéterminée commune à ladite pluralité de missions de vol.

De cette manière, le contexte d'acquisition des mesures est harmonisé, facilitant ainsi le suivi de l'état du moteur de vol à vol. Autrement dit, le fait de cibler une phase spécifique de la mission de vol permet de créer un contexte répétable entre différentes missions de vols de l'aéronef.

Dans des modes particuliers de mise en oeuvre, ledit procédé est exécuté de manière périodique toutes les N missions de vol, N étant un nombre supérieur ou égal à 1.

Dans des modes particuliers de mise en oeuvre, l'aéronef comporte au moins une paire de moteurs identiques, au moins les étapes d'acquisition, de normalisation, de génération d'un modèle courant, de détection d'au moins une anomalie potentielle, de génération d'un message de maintenance et de transmission dudit message étant exécutées pour chaque moteur de la paire, l'étape de détection d'au moins une anomalie potentielle associée à un moteur comportant en outre une comparaison des modèles courants respectivement associés aux moteurs de la paire.

Le fait de comparer entre eux les modèles courants respectifs des moteurs permet d'accroitre la fiabilité du diagnostic final fourni dans les messages de maintenance de chacun des moteurs.

Selon un deuxième aspect, l'invention concerne un programme d'ordinateur comportant un ensemble d'instructions de code de programme qui, lorsqu'elles sont exécutées par un processeur, configurent ledit processeur pour mettre en oeuvre des étapes de normalisation, de génération d'un modèle courant, de détection d'au moins une anomalie potentielle et de génération d'un message de maintenance d'un procédé de surveillance selon l'invention.

Selon un troisième aspect, l'invention concerne un support d'enregistrement lisible par un ordinateur sur lequel est enregistré un programme d'ordinateur selon l'invention.

Selon un quatrième aspect, l'invention concerne un dispositif de traitement destiné à être embarqué dans un aéronef comportant des moyens d'acquisition configurés pour acquérir lors d'au moins une mission de vol des mesures selon deux ensembles, un premier ensemble de mesures de variables endogènes représentatives du comportement d'un moteur de l'aéronef, et un second ensemble de mesures de variables exogènes représentatives du contexte d'acquisition. En outre, ledit dispositif de traitement comporte :
- un module de normalisation, configuré pour normaliser les mesures du premier ensemble par rapport aux mesures du second ensemble,
- un module de génération, configuré pour générer un modèle courant représentatif de l'évolution temporelle du comportement du moteur en fonction des mesures normalisées,
- un module de détection, configuré pour détecter au moins une anomalie potentielle du comportement du moteur en fonction d'une comparaison du modèle courant avec un modèle de référence prédéfini représentatif du comportement du moteur dénué d'anomalie,
- un module de génération, configuré pour générer un message de maintenance comportant une alerte basée sur une anomalie détectée ainsi que des préconisations de maintenance ou des opérations de maintenance ou des ordres de services associés à ladite alerte.

Selon un cinquième aspect, l'invention concerne un système de surveillance d'au moins un moteur d'aéronef, ledit système comportant :
- des moyens d'acquisition destinés à être embarqués dans l'aéronef et configurés pour acquérir lors d'au moins une mission de vol des mesures selon deux ensembles, un premier ensemble de mesures de variables endogènes représentatives du comportement du moteur, et un second ensemble de mesures de variables exogènes représentatives du contexte d'acquisition,
- un dispositif de traitement selon l'invention,
- au moins un dispositif récepteur au sol,
- des moyens de communication configurés pour au moins transmettre un message de maintenance généré par le dispositif de traitement vers le dispositif récepteur au sol.

Selon un sixième aspect, l'invention concerne un aéronef comportant :
- des moyens d'acquisition configurés pour acquérir lors d'au moins une mission de vol des mesures selon deux ensembles, un premier ensemble de mesures de variables endogènes représentatives du comportement du moteur, et un second ensemble de mesures de variables exogènes représentatives du contexte d'acquisition,
- un dispositif de traitement selon l'invention,
- des moyens de communication configurés pour au moins transmettre un message de maintenance généré par le dispositif de traitement vers au moins un dispositif récepteur au sol.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente schématiquement un exemple de réalisation d'un système de surveillance selon l'invention d'au moins un moteur d'un aéronef ;
[Fig. 2] la figure 2 représente un organigramme d'un mode de mise en oeuvre d'un procédé de surveillance selon l'invention du moteur lors d'une mission de vol de l'aéronef ;
[Fig. 3] la figure 3 représente un mode particulier de mise en oeuvre selon l'invention du procédé de la figure 2 au cours duquel, lorsqu'une anomalie est détectée, le procédé comporte une étape de confirmation et / ou d'isolation matérielle de ladite anomalie ;
[Fig. 4] la figure 4 représente un mode particulier de mise en oeuvre selon l'invention du procédé de la figure 2 au cours duquel, lorsque qu'une anomalie a été détectée et qu'un rapport comportant au moins une opération de maintenance relative à ladite anomalie a été généré, le procédé comporte une étape d'estimation de l'impact du non suivi de ladite opération de maintenance sur la consommation de carburant du moteur.

### Description des modes de réalisation

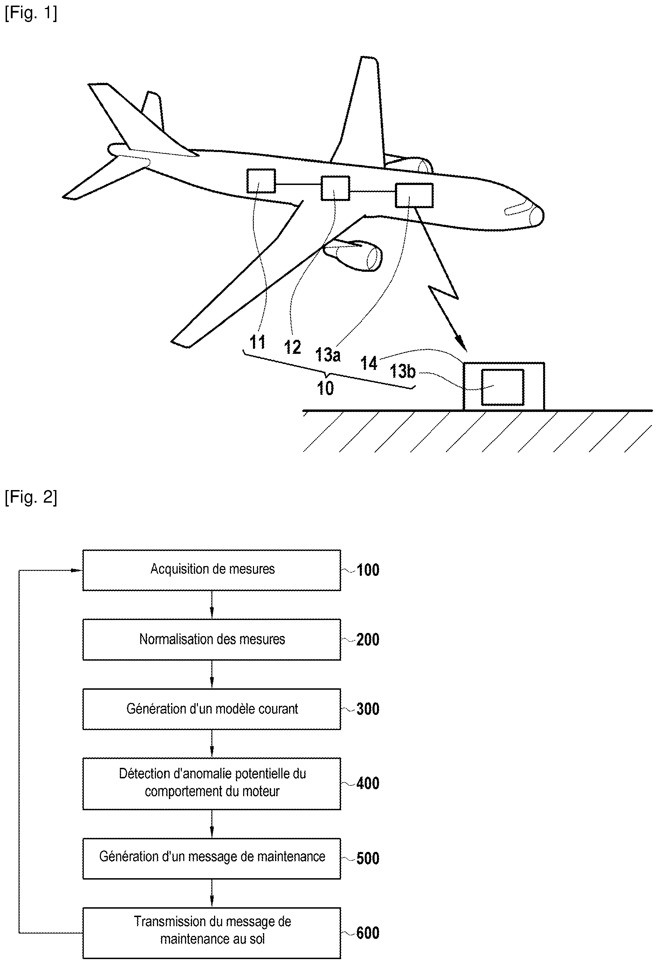

La figure 1 représente schématiquement un exemple de réalisation d'un système 10 de surveillance d'au moins un moteur d'un aéronef.

La suite de la description vise plus spécifiquement, mais de manière nullement limitative, un aéronef de type avion équipé d'une paire de moteurs identiques de type turbomoteurs, comme par exemple des turbopropulseurs.

Rien n'exclut cependant, suivant d'autres exemples non détaillés ici, de considérer d'autres types de turbomoteurs, comme par exemple un turboréacteur, mais également, et de manière plus générale, des moteurs qui ne sont pas des turbomoteurs, comme par exemple des moteurs à pistons. L'invention est en effet applicable à tout type de moteur dont on souhaite surveiller le fonctionnement. Rien n'exclut non plus de considérer un aéronef d'un autre type, comme par exemple un hélicoptère.

Par ailleurs, il faut noter qu'aucune limitation n'est attachée au nombre de paires de moteurs identiques de l'aéronef. Par exemple, l'aéronef peut comporter deux paires de moteurs, de sorte à être équipé au total de quatre moteurs qui peuvent être soit tous identiques entre eux (autrement dit les paires sont identiques entre elles), soit correspondre à deux paires différentes entre elles, les moteurs au sein d'une même paire étant néanmoins identiques entre eux. Enfin, rien n'exclut que l'aéronef comporte également, en sus d'une ou plusieurs paires de moteurs identiques, un ou plusieurs moteurs qui, considérés individuellement, diffèrent de tous les autres moteurs.

De plus, et afin de simplifier la description, on considère dans un premier temps une surveillance effectuée pour un des moteurs de la paire. La manière dont cette surveillance est étendue à l'ensemble des moteurs de l'aéronef est évoquée ultérieurement.

Le système 10 de surveillance comporte des moyens d'acquisition 11 embarqués dans l'aéronef et configurés pour acquérir lors d'au moins une mission de vol des mesures selon deux ensembles.

Par « mission de vol », on fait référence ici à la plage temporelle au cours de laquelle l'aéronef est en fonctionnement. Par conséquent, une mission de vol couvre aussi bien les phases de roulage avant et après atterrissage (phases encore dénommées « taxi » dans la littérature anglo-saxonne), la phase de croisière, mais également les phases durant lesquelles l'aéronef n'a pas encore quitté son parking avant le décollage ou bien a déjà atteint son parking après l'atterrissage, ses moteurs étant néanmoins en fonctionnement.

Sauf mention contraire, la suite de la description s'attache à décrire l'invention au cours d'une seule mission de vol. Rien n'exclut toutefois de considérer une pluralité de missions de vol, comme cela est traité ultérieurement.

Les deux ensembles de mesures correspondent respectivement à un premier ensemble de mesures de variables endogènes représentatives du comportement du moteur, et à un second ensemble de mesures de variables exogènes représentatives du contexte d'acquisition.

A titre d'exemple nullement limitatif, les variables endogènes comprennent la vitesse de rotation d'un arbre de turbine, comme par exemple un arbre N2, le débit du carburant dans le moteur, les températures et / ou pressions et / ou niveaux de fluides en différentes localisations du moteur (par exemple, avant et / ou après compression), la température des gaz d'échappement EGT (acronyme de l'expression anglo-saxonne « Exhaust Gas Température »), etc.

Rien n'exclut cependant, suivant d'autres exemples non détaillés ici, de considérer d'autres variables endogènes dès lors qu'elles sont représentatives du comportement d'au moins une partie du moteur au cours de la mission de vol.

Les variables exogènes, quant à elles, comprennent par exemple la température extérieure, l'altitude, le poids de l'avion, la vitesse de l'aéronef, etc.

Là encore, rien n'exclut, suivant d'autres exemples non détaillés ici, de considérer d'autres variables exogènes dès lors qu'elles sont représentatives du contexte dans lequel sont acquises les mesures du premier ensemble.

On comprend donc que chacun desdits deux ensembles comportent des mesures acquises au cours du temps et relatives à une ou plusieurs variables. De cette manière, chaque ensemble de mesures peut être vus comme un ensemble multidimensionnel dont la dimension dépend du nombre de variables endogènes / exogènes considérées ainsi que du nombre de mesures pour chacune de ces variables.

De manière conventionnelle, les moyens d'acquisition 11 comportent au moins un capteur dédié à la mesure de chaque variable endogène / exogène. En ce qui concerne les variables endogènes, les capteurs associés sont intégrés au moteur. Par exemple, dans le cas d'une variable correspondant à un niveau d'huile, un capteur résistif à résolution discrète est mis en oeuvre dans un réservoir du circuit d'huile du moteur. Selon un autre exemple, dans le cas d'une variable correspondant à une température d'huile, une sonde de température est mise en oeuvre dans ledit réservoir, etc.

De tels capteurs, qu'ils soient dédiés à des mesures de variables endogènes ou exogènes, peuvent être choisis et placés dans l'aéronef en fonction de la variable considérée.

Lorsque des mesures ont été acquises par les moyens d'acquisition 11 selon lesdits deux ensembles, ces mesures sont transmises, par exemple par des moyens filaires ou non filaires, et selon tout protocole de transmission choisi à cet effet, entre lesdits moyens d'acquisition 11 et un dispositif de traitement 12. Une fois ces mesures reçues par le dispositif de traitement 12, celui-ci peut effectuer des traitements visant à surveiller le moteur considéré parmi la paire de moteurs de l'aéronef, en mettant en oeuvre une partie d'un procédé de surveillance dudit moteur.

Le dispositif de traitement 12 comporte par exemple un ou plusieurs processeurs et des moyens de mémorisation (disque dur magnétique, mémoire électronique, disque optique, etc.) dans lesquels sont mémorisés des données et un programme d'ordinateur, sous la forme d'un ensemble d'instructions de code de programme à exécuter pour mettre en oeuvre une partie des étapes du procédé surveillance.

Alternativement ou en complément, le dispositif de traitement 12 comporte également un ou des circuits logiques programmables, de type FPGA, PLD, etc., et / ou circuits intégrés spécialisés (ASIC), et / ou un ensemble de composants électroniques discrets, etc. adaptés à mettre en oeuvre une partie des étapes du procédé de surveillance.

En d'autres termes, le dispositif de traitement 12 comporte un ensemble de moyens configurés de façon logicielle (programme d'ordinateur spécifique) et / ou matérielle (FPGA, PLD, ASIC, etc.) pour mettre en oeuvre différentes étapes du procédé de surveillance.

Il est à noter que le dispositif de traitement 12 fait également partie du système 10 de surveillance et est embarqué dans l'aéronef. Par exemple, le dispositif de traitement 12 est intégré au moteur surveillé.

Il faut également noter que le choix d'une telle intégration au moteur ne constitue qu'une variante de réalisation de l'invention. Par exemple, ledit dispositif de traitement 12 peut être installé à distance du moteur surveillé. De manière générale, le choix de la localisation du dispositif de traitement 12 résulte d'un compromis entre, d'une part, praticité d'installation et dimensionnement du moteur dans le cas d'une intégration au moteur, et, d'autre part, isolation du dispositif de traitement 12 de perturbations, par exemple de type vibratoire, générées par le moteur dans le cas d'une installation à distance du moteur. Ce compromis peut en outre tenir compte de la distance séparant le dispositif de traitement 12 du moteur surveillé dans le cas où les mesures acquises sont transmises au moyen d'un réseau de communication non filaire.

Le système 10 de surveillance comporte en outre au moins un dispositif récepteur 14 au sol ainsi que des moyens de communication configurés pour échanger des données entre l'aéronef et ledit au moins un dispositif récepteur 14 au sol.

A titre d'exemple nullement limitatif, lesdits moyens de communication comprennent des unités ACARS 13a, 13b (acronyme de l'expression anglosaxonne « Airline Communications, Addressing and Reporting System »), équipant respectivement l'aéronef et le dispositif récepteur 14 au sol, et configurées pour communiquer selon le standard ARINC (acronyme de l'expression anglo-saxonne « Aeronautical Radio Incorporated »). On note que l'unité ACARS 13a équipant l'aéronef peut être intégrée au dispositif de traitement 12.

Le choix d'une communication au moyen d'unités ACARS 13a 13b ne constitue qu'une variante de réalisation de l'invention. Ainsi, aucune limitation n'est attachée au choix desdits moyens de communication, qui peuvent être non filaires et utiliser tout réseau de communication dédié, comme par exemple Wifi, 3G, 4G, 5G, Bluetooth, Satellite, Lifi, etc., ou bien encore filaires, dans le cas d'un réseau de type Ethernet.

Bien entendu, lesdits moyens de communication peuvent être intégrés au dispositif de traitement 12 et / ou au dispositif récepteur 14. De manière alternative, les moyens de communication communiquent avec ces dispositifs sans y être intégrés. En d'autres termes, les moyens de communication se répartissent entre l'aéronef et le sol, leur intégration au niveau de ces deux localités n'étant pas un facteur limitant de l'invention.

On comprend que le choix des moyens de communication dépend, notamment, de la distance séparant l'aéronef du dispositif récepteur 14 au sol. Dit encore autrement, ce choix dépend du moment pendant lequel est exécuté le procédé de surveillance au cours de la mission de vol.

Le dispositif récepteur 14 au sol est configuré pour recevoir des données générées par le dispositif de traitement 12 lorsque celui-ci exécute des étapes du procédé de surveillance. Ces données sont contenues dans des messages de maintenance, comme cela est détaillé ultérieurement, tout ou partie de ces données étant destinées à être transmises à un opérateur de maintenance, comme par exemple un technicien salarié appartenant à la société en charge de la fabrication du moteur, dite encore motoriste, ou bien à une société en charge de l'exploitation dudit moteur, dans le cas où des opérations de maintenance sont à envisager, ainsi que préférentiellement à l'avionneur propriétaire de l'aéronef.

Par exemple, le dispositif récepteur 14 au sol est choisi parmi au moins un PC, un smartphone, une tablette, détenu par un opérateur de maintenance du motoriste, de sorte que cet opérateur puisse prendre connaissance facilement des données transmises et agir en conséquence pour assurer la maintenance. A cet effet, de tels dispositifs récepteurs 14 comportent avantageusement des moyens de mémorisation dans lesquels est stockée une documentation des opérations de maintenance à appliquer en fonction des données qui ont été générées par le dispositif de traitement 12.

D'autres types de dispositifs récepteurs 14 peuvent être envisagés pour l'opérateur de maintenance, éventuellement en complément d'un PC, smartphone ou tablette.

Ainsi, selon un exemple particulier, le dispositif récepteur 14 est un drone. Un tel drone permet avantageusement d'assister l'opérateur de maintenance, voire de réaliser l'intégralité d'une opération de maintenance, comme par exemple une endoscopie ou une analyse d'une photo d'une pièce spécifique du moteur.

Selon encore un autre exemple particulier, le dispositif récepteur 14 est une paire de lunettes de réalité augmentée, encore dit casque de réalité virtuel, qui sont destinées à être portées par l'opérateur de maintenance et dans lesquelles sont projetées une modélisation des opérations de maintenance à effectuer.

Dans le cas où les données générées par le dispositif de traitement 12 sont également transmises à l'avionneur, elles le sont typiquement vers une station au sol dans des locaux détenus par l'avionneur, ces locaux étant eux-mêmes localisés, par exemple, dans un aéroport. De cette manière, l'avionneur peut prendre connaissance des résultats de la surveillance effectuée par le dispositif de traitement 12, et mettre ainsi à jour l'état de fonctionnement de son aéronef, de sorte à réaliser un suivi précis de celui-ci, et plus largement de toute sa flotte lorsque plusieurs aéronefs sont considérés.

La figure 2 représente un organigramme d'un mode de mise en oeuvre du procédé de surveillance du moteur lors d'une mission de vol de l'aéronef.

Le procédé de surveillance comporte plusieurs étapes. Dans son principe général, le procédé vise tout d'abord, au sein même de l'aéronef et via les moyens d'acquisition ainsi que le dispositif de traitement 12, à acquérir des mesures selon lesdits deux ensembles, puis à appliquer des traitements successifs à ces mesures afin d'obtenir un modèle de l'état du moteur, modèle sur la base duquel est effectuée une détection d'anomalie potentielle puis une proposition d'opérations de maintenance visant à corriger ou prévenir l'anomalie. Finalement, cette proposition d'opérations de maintenance, notamment, est transmise au sol vers le dispositif récepteur 14.

A cet effet, le procédé de surveillance comporte dans un premier temps une étape 100 d'acquisition de mesures selon lesdits deux ensembles. Une telle étape 100 est mise en oeuvre par les moyens d'acquisition 11, donc à bord de l'aéronef au cours de la mission de vol.

Dans un mode particulier de mise en oeuvre, les mesures sont acquises au cours d'une phase prédéterminée de la mission de vol.

Par exemple, ladite phase prédéterminée correspond au décollage, à l'atterrissage, au roulage avant décollage, au roulage avant décollage, ou bien encore à la phase de croisière.

Selon un autre exemple, la phase prédéterminée correspond à une plage temporelle comprise dans les phases précédemment citées, et au cours de laquelle des conditions particulières de fonctionnement sont ciblées, comme par exemples des conditions d'isovitesse, d'isoaltitude, etc.

Rien n'exclut cependant de considérer une acquisition de mesures au cours de plusieurs phases prédéterminées de la mission de vol de l'aéronef. Par exemple, les mesures peuvent être effectuées de manière récurrente tout du long de ladite mission de vol, ou bien encore, selon un autre exemple, seulement pendant une plage temporelle inférieure à la durée totale de la mission de vol et à cheval sur une ou plusieurs phases prédéterminées de vol.

Selon encore un autre exemple, les acquisitions peuvent être effectuées suivant plusieurs phases qui ne sont pas consécutives, comme par exemple le décollage et l'atterrissage. En somme, aucune limitation n'est attachée aux phases de la mission vol ainsi qu'à la durée d'acquisition considérées.

Ainsi, à l'issue de l'étape 100 d'acquisition, on dispose de deux ensembles de mesures qui ont été acquises au cours du temps pendant la mission de vol de l'aéronef. Ces deux ensembles de mesures sont alors transmis au dispositif de traitement 12, où elles sont stockées afin d'être traitées.

Il convient de noter que ces acquisitions sont classiquement effectuées selon un pas de temps prédéterminé. Par exemple, ledit pas de temps est constant, de sorte que l'acquisition des mesures est périodique. Alternativement, ledit pas de temps est variable tout du long de la mission de vol, ou bien seulement pendant une des phases de la mission de vol dans le cas où plusieurs phases sont considérées.

Le procédé de surveillance comporte ensuite une étape 200 de normalisation des mesures du premier ensemble par rapport aux mesures du second ensemble. Cette étape 200 est mise en oeuvre par le dispositif de traitement 12, donc à bord de l'aéronef au cours de la mission de vol.

Une telle étape 200 de normalisation permet d'obtenir des mesures normalisées, c'est-à-dire des mesures ramenées à un seul et même contexte d'acquisition, de sorte à pouvoir les comparer facilement et de manière pertinente entre elles. Autrement dit, cette étape 200 de normalisation vise à projeter les mesures du premier ensemble dans un référentiel commun de comparaison, afin de supprimer l'influence des conditions extérieures et des consignes sur les variables endogènes décrivant l'état du moteur. On comprend en effet que le contexte d'acquisition, symbolisé par les mesures du second ensemble, a une influence sur les mesures du premier ensemble, de sorte qu'il est difficile, et également peu pertinent, de comparer entre elles les mesures brutes issues de l'étape 100.

Dans un mode particulier de mise en oeuvre, l'étape 200 de normalisation comporte tout d'abord un filtrage des mesures du premier ensemble, de sorte à supprimer des mesures aberrantes situées en dehors d'intervalles respectifs prédéterminés. Un tel filtrage permet avantageusement de fiabiliser les mesures du premier ensemble, et donc in fine de fiabiliser l'ensemble du procédé de surveillance.

En alternative, ou bien en complément dudit filtrage de mesures, il est également possible d'envisager une sélection des mesures du premier ensemble, comme par exemple une sélection réalisée par un opérateur.

On comprend donc que chaque variable endogène, pour laquelle sont acquises des mesures ensuite classées dans le premier ensemble, est associée à un intervalle correspondant à une plage de valeurs définie par deux bornes extrêmales, une borne inférieure et une borne supérieure. Ces bornes extrêmales correspondent à une réalité physique estimée empiriquement, comme par exemple le domaine de fonctionnement du moteur, le vieillissement du moteur, etc. Une telle estimation s'obtient par exemple à l'aide d'une expertise acquise antérieurement. Alternativement, il peut s'agir d'une réalité estimée de manière théorique, par exemple à l'aide de simulations numériques réalisées à partir d'une modélisation numérique du moteur.

Dans ce mode particulier de mise en oeuvre, une mesure aberrante supprimée est remplacée par une mesure par défaut. De cette manière, aucune absence de mesures n'est à noter dans l'évaluation temporelle de l'état du moteur, ce qui permet une surveillance précise de ce dernier.

Par exemple, une telle mesure par défaut correspond à la mesure qui la précède dans le temps.

Selon un autre exemple, une telle mesure par défaut est obtenue par interpolation de mesures encadrant dans le temps ladite mesure aberrante.

Dans une alternative de mise en oeuvre, chaque mesure aberrante est supprimée sans être remplacée.

D'une manière générale, le choix entre un remplacement d'une mesure aberrante par une mesure par défaut et la suppression définitive de ladite mesure aberrante s'effectue en fonction de différents paramètres, comme par exemple un écart temporel séparant les mesures acquises dans le premier ensemble. On comprend en effet que plus cet écart temporel est faible, plus il y a de mesures acquises, et donc plus il est facile de se passer d'une ou plusieurs mesures jugées aberrantes sans pour autant compromettre une surveillance précise du moteur.

Une fois le filtrage effectué, l'étape 200 comporte une normalisation des mesures filtrées du premier ensemble par rapport aux mesures du second ensemble. Cette normalisation est par exemple mise en oeuvre selon un modèle de régression.

Il est à noter que la manière dont est effectivement mise en oeuvre la normalisation ne dépend pas du filtrage effectué auparavant. Ainsi, le choix d'un filtrage en amont de la normalisation des mesures ne constitue qu'une variante d'implémentation de l'invention. Il est en effet tout à fait possible de mettre en oeuvre, dans un premier temps, une normalisation des données du premier ensemble par rapport aux données du second ensemble, et, seulement ensuite, d'effectuer un filtrage des données normalisées.

En outre, rien n'exclut non plus de conserver toutes les mesures acquises et donc de n'effectuer aucun filtrage. Le cas échéant, il est néanmoins possible d'attribuer un statut de validité à chaque mesure acquise, afin de pouvoir juger la pertinence de l'évaluation de l'état du moteur. De tels statuts sont par exemple attribués aux mesures acquises directement par les moyens d'acquisition, ou bien encore par le dispositif de traitement 12.

Une fois les mesures normalisées obtenues, le procédé comporte ensuite une étape 300 de génération d'un modèle courant représentatif de l'évolution temporelle du comportement du moteur en fonction des mesures normalisées. Cette étape 300 est mise en oeuvre par le dispositif de traitement 12, donc à bord de l'aéronef au cours de la mission de vol.

Classiquement, un tel modèle courant correspond à une collection de sous-modèles, chaque sous-modèle décrivant l'évolution temporelle d'une variable endogène à partir des mesures normalisées associée à cette variable endogène. Ainsi, il est donc possible de donner une représentation visuelle de ces sous-modèles, et donc in fine du modèle courant, en traçant dans des graphiques l'évolution des variables endogènes respectivement associées auxdits sous-modèles.

On comprend ainsi que le caractère multidimensionnel, comme mentionné précédemment, des premier et second ensembles de mesures acquis lors de l'étape 100 impliquent également que le modèle courant peut être vu comme un ensemble multidimensionnel.

Le procédé de surveillance comporte alors une étape 400 de détection d'au moins une anomalie potentielle du comportement du moteur en fonction d'une comparaison du modèle courant avec un modèle de référence prédéfini représentatif du comportement du moteur dénué d'anomalie. Cette étape 400 est mise en oeuvre par le dispositif de traitement 12, donc à bord de l'aéronef au cours de la mission de vol.

Par « au moins une anomalie », on fait référence ici à au moins une anomalie liée à une divergence entre un sous-modèle, lié à une variable endogène et issu du modèle courant, avec le sous-modèle correspondant du modèle de référence.. Aussi, on comprend bien que des divergences sont susceptibles d'exister pour plusieurs sous-modèles du modèle courant, de sorte que plusieurs anomalies potentielles soient détectées.

Cela étant, et comme mentionné ci-avant, les modèles courant et de référence peuvent être vus comme des modèles multidimensionnels. Par conséquent, le terme « anomalie » peut également être utilisé pour signifier un dysfonctionnement général du moteur, au sens d'un dysfonctionnement correspondant à une ou plusieurs anomalies locales respectivement observées dans les sous-modèles liés aux variables endogènes.

Concrètement, et à titre purement illustratif, considérons l'hypothèse selon laquelle une divergence par rapport à un niveau de débit de carburant attendu, ainsi qu'une divergence par rapport à une température d'huile attendue, sont observées. Dès lors, il est parfaitement équivalent de considérer que deux anomalies de comportement du moteur ont été détectées, si on s'attache à décrire le moteur de manière locale, ou bien qu'une seule anomalie de comportement du moteur a été détectée, si on s'attache à décrire le moteur de manière globale, l'anomalie globale correspondant alors au regroupement des deux anomalies locales.

La comparaison du modèle courant avec le modèle de référence permet ainsi de suivre l'évolution du comportement du moteur, et donc de son état, voire de son éventuelle dégradation au cours du temps.

Le modèle de référence présente une structure identique à celle du modèle de courant, afin que ceux-ci puissent être comparés entre eux. Dès lors, le modèle de référence comporte également des sous-modèles respectivement associés à des variables endogènes identiques à celles considérées pour le modèle courant.

Par exemple, le modèle de référence a été déterminé en fonction de M modèles courants obtenus lors de missions de vol antérieures à la mission de vol considérée et au cours desquelles aucune anomalie n'a été détectée, M étant un nombre supérieur ou égal à 1. Ainsi, selon cet exemple, des modèles courants ont été antérieurement générés, préférentiellement à compter de la mise en service du moteur, cette mise en service étant, sauf exception, considérée comme dépourvue d'anomalie de fonctionnement. La génération de ces modèles courants antérieurs est par exemple obtenue au moyen d'étapes d'acquisition 100, de normalisation 200 et de génération 300 de modèles telles que décrites ci-avant. On comprend dès lors que ces modèles courants antérieurs ont été générés sur la base de mesures acquises lors de phases de la mission de vol identiques à celles considérées pour l'invention, de sorte que le modèle de référence puisse être comparé facilement, et surtout de manière pertinente, avec le modèle courant de l'invention.

Préférentiellement, le nombre M de modèles courants antérieurs considérés est strictement supérieur à 1. Dans ce cas, le modèle de référence est par exemple déterminé en fonction d'une moyenne, d'une médiane ou bien encore d'une pondération desdits M modèles courants antérieurs. Autrement dit, pour chaque variable endogène, il est procédé à une moyenne, une médiane ou une pondération des mesures associées à cette variable endogène et contenues dans chacun des M modèles courants antérieurs.

Par « pondération », on fait référence ici au fait d'attribuer des poids sous forme de coefficients numériques aux mesures de la variable endogène considérée. Il est à noter que le terme « pondération » couvre également le cas où une partie de ces poids sont nuls, de sorte que seule une partie desdits M modèles courants est en définitive prise en compte dans la détermination du modèle de référence.

Il s'agit donc en fait, pour une variable endogène, d'une moyenne, d'une médiane ou d'une pondération effectuée parmi les M sous-modèles qui lui sont associés. Il faut noter que le fait de considérer un nombre M strictement supérieur à 1 permet avantageusement de prendre en compte le vieillissement du moteur tant que ce dernier est sain, et donc d'avoir un modèle de référence qui modélise finement l'évolution de l'état du moteur.

Rien n'exclut cependant de considérer un nombre M égal à 1, c'est-à-dire un unique modèle courant antérieur formant donc à lui seul le modèle de référence. On note alors que le choix entre un nombre M égal à 1 ou plus grand que 1 résulte, notamment, d'un compromis entre ressources de calculs nécessaires et précision de la modélisation du comportement, vieillissement compris, d'un moteur sain.

Dans un mode particulier de mise en oeuvre, et afin de réaliser ladite détection d'au moins une anomalie potentielle, l'étape 400 comporte :
- une détermination d'une tendance d'évolution du modèle courant : par « tendance d'évolution », on fait référence ici à une projection dans le temps de l'évolution du modèle courant, c'est-à-dire de chacun des sous-modèles qui le composent. Concrètement, il s'agit ici d'anticiper sur un horizon temporel prédéterminé l'évolution des mesures normalisées associées aux variables endogènes. Une telle anticipation peut être déterminée selon une ou plusieurs méthodes d'analyse statistique dédiées, ou bien en prenant en compte une pente théorique de vieillissement. On note que d'un point de vue graphique, la tendance d'évolution d'une variable endogène correspond à une prolongation de sa trajectoire dans son graphique d'évolution sur ledit horizon temporel ;
- une comparaison de la tendance d'évolution du modèle courant avec l'évolution temporelle du modèle de référence, de sorte à identifier une déviation potentielle du modèle courant avec le modèle de référence : une telle comparaison est mise en oeuvre en comparant, pour chaque variable endogène, la tendance d'évolution de cette dernière avec l'évolution correspondante contenue dans un sous-modèle du modèle de référence. On note qu'il est possible de constater, pour chaque variable endogène du modèle courant, une déviation avec le sous-modèle correspondant du modèle de référence. Aussi, lorsque plusieurs déviations de ce type sont constatées, la déviation associée au modèle de référence dans sa globalité peut être représentée sous la forme d'un vecteur dont les composantes sont représentatives des déviations associées à chaque variables endogènes ;
- une détection d'anomalie en fonction de ladite déviation potentielle : lorsqu'une déviation a été identifiée, la détection d'anomalie s'effectue en fonction de l'amplitude de ladite déviation. A cet effet, l'amplitude de la déviation est comparée à une valeur seuil, cette valeur seuil pouvant correspondre à un vecteur de scalaires le cas échéant, par exemple en fonction d'un taux maximal de fausses détections à atteindre.

Ce mode de mise en oeuvre est avantageux car il permet, grâce à la détermination de la tendance d'évolution du modèle courant, de détecter de potentielles futures anomalies. Autrement dit, il permet au procédé de s'inscrire dans un cadre de maintenance prédictive.

Rien n'exclut cependant, suivant d'autres exemples non détaillés ici, d'avoir une détection d'au moins une anomalie potentielle qui ne soit pas basée sur une détermination d'une tendance d'évolution du modèle courant. Ainsi, il est possible d'envisager de comparer le modèle courant avec le modèle de référence uniquement à partir des mesures normalisées telles qu'obtenues une fois l'acquisition terminée, c'est-à-dire sans prévoir l'évolution du modèle courant. Dans ce cas, le terme « potentielle » reste approprié pour désigner une anomalie possiblement déjà existante.

Selon un exemple de mise en oeuvre, une alerte est émise lorsqu'une anomalie est détectée. Une telle alerte correspond par exemple à un signal sonore, à un signal lumineux, etc., ce signal étant transmis au dispositif récepteur 14 au sol, voire également au cockpit de l'aéronef afin d'alerter le personnel naviguant.

On note qu'une alerte n'est pas nécessairement émise à chaque détection d'anomalie. Par exemple, l'émission d'une alerte s'effectue au bout d'un nombre prédéterminé d'occurrences de l'anomalie, ce qui peut être le cas si le procédé de surveillance est exécuté plusieurs fois pendant la mission de vol de l'aéronef, ou bien si plusieurs missions de vol sont considérées avec au moins une exécution du procédé de surveillance pour chacune de ces missions.

Le procédé de surveillance comporte ensuite, si une anomalie est détectée, une étape 500 de génération d'un message de maintenance comportant une alerte basée sur l'anomalie détectée ainsi que des préconisations de maintenance ou des opérations de maintenance associées à ladite alerte. Cette étape 500 est mise en oeuvre par le dispositif de traitement 12, donc à bord de l'aéronef au cours de la mission de vol.

Il convient de noter que les opérations de maintenance contenues dans le message de maintenance peuvent, selon un exemple de mise en oeuvre, revêtir un caractère obligatoire. Dit encore autrement, ces opérations de maintenance peuvent être associées à une contrainte de mise en oeuvre typiquement imposée par la société fabricante du moteur à une société en charge de l'exploitation de ce moteur.

De cette manière, il est possible d'agréger dans un même message, par exemple sous la forme d'un rapport de maintenance, toutes les informations nécessaires à un opérateur de maintenance, telles que la nature de l'anomalie, les opérations de maintenance à mettre en oeuvre, et avantageusement le matériel nécessaire au traitement de l'anomalie, etc. Cet opérateur peut dès lors réparer une anomalie effective, ou bien procéder à des ajustements afin d'anticiper une future anomalie.

Dans un exemple plus particulier de mise en oeuvre, au-delà des informations relatives à une anomalie détectée (type d'anomalie, localisation de l'anomalie, etc.), le message comprend également l'une ou plusieurs des informations suivantes (pouvant être incluses dans ledit rapport de maintenance) : un identifiant de l'aéronef, un identifiant du moteur, des informations de contexte issues des mesures du second ensemble acquis, des informations relatives à des informations de maintenance qui ont été menées antérieurement, etc. Le message de maintenance peut également comprendre (par exemple par incorporation dans ledit rapport de maintenance) des informations relatives à un contrat commercial liant le motoriste à l'avionneur pour le moteur considéré, ainsi que le modèle courant.

II est à noter que le message de maintenance peut être généré quand bien même aucune opération de maintenance n'est proposée, par exemple dans le cas où aucune anomalie n'a été détectée au cours de l'étape 400. Dans ce cas, ledit message de maintenance comporte uniquement le modèle courant, ce dernier permettant avantageusement au motoriste et / ou l'avionneur de réaliser un suivi dans le temps de l'état du moteur, par exemple en l'archivant.

Puis, le procédé de surveillance comporte une étape 600 de transmission du message de maintenance vers au moins le dispositif récepteur 14 au sol.

Comme mentionné précédemment, le dispositif récepteur 14 au sol est par exemple choisi au moins parmi : un PC, un smartphone, une tablette, un drone, des lunettes de réalité augmentée, et est en possession d'un opérateur de maintenance appartenant au motoriste.

Rien n'exclut de transmettre le message de maintenance vers une pluralité de dispositifs récepteurs de ce type. Rien n'exclut non plus de transmettre le message de maintenance vers une station sol appartenant à l'avionneur, auquel cas la station sol comporte typiquement un PC réceptionnant ledit rapport.

Dans un mode particulier de mise en oeuvre, le message de maintenance est également transmis vers des moyens d'affichage du cockpit de l'aéronef. De cette manière, le personnel naviguant peut prendre connaissance du contenu du message ainsi que des éventuelles opérations de maintenance préconisées.

Des exemples de cas d'application du procédé de surveillance sont donnés ci-après à titre purement illustratif et de manière nullement limitative :
- selon un premier exemple, le système 10 de surveillance a détecté un colmatage d'un filtre, par exemple un filtre à huile. Il s'agit d'une détection prévisionnelle, donc avant l'apparition d'un impact opérationnel, de sorte que l'aéronef peut continuer à voler. Le dispositif de traitement 12 alerte le dispositif récepteur 14 au sol avec un message de maintenance demandant le remplacement du filtre encrassé avec un délai suffisant pour permettre une planification de l'opération et ainsi minimiser l'immobilisation de l'aéronef ;
- selon un deuxième exemple, le système 10 de surveillance a détecté un corps étranger (encore dit « FOD » dans la littérature anglosaxonne en tant qu'acronyme de l'expression « Foreign Object Débris » ou bien « Foreign Object Damage ») à partir d'une surveillance des aubes d'une soufflante (encore dite « fan » dans la littérature anglo-saxonne) du turbomoteur. Le message de maintenance transmis au sol comporte alors les réparations qui seront nécessaires à l'aéroport de destination. Ainsi, à l'arrivée de l'aéronef à destination, des aubes de substitution ainsi que des éléments de rééquilibrage du moteur seront prêts afin d'accélérer l'intervention. On note que le système 10 de surveillance peut avantageusement prévenir directement l'aéroport pour prévoir un emplacement dédié à l'intervention ;
- selon un troisième exemple, le système 10 de surveillance a détecté des jeux mécaniques en têtes d'aubes. Le message de maintenance est transmis au sol sur un PC d'un opérateur de maintenance, lui permettant ainsi de cibler sur quel étage du moteur il doit réaliser une endoscopie. Avantageusement, les opérations de maintenance sont aussi transmises sur des lunettes de réalité virtuelle portées par l'opérateur, afin que celui-ci puisse visualiser la procédure à suivre en amont de l'intervention effective sur le moteur.

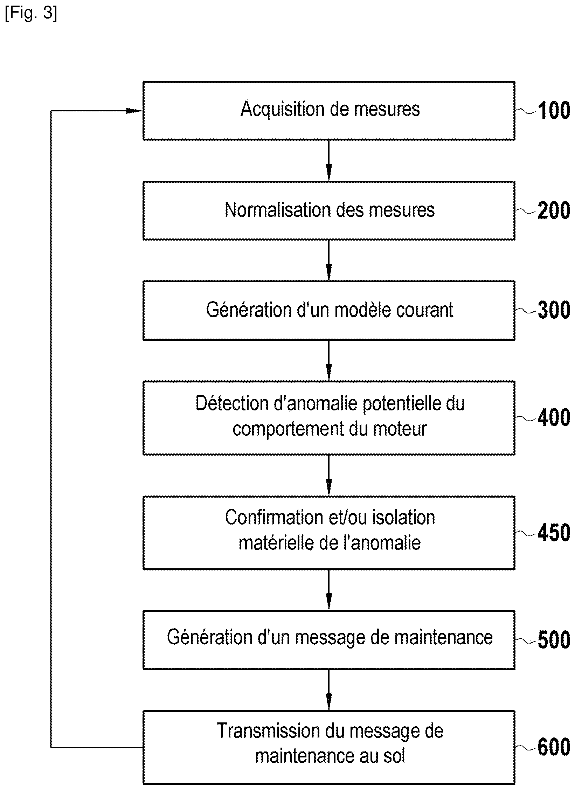

La figure 3 représente un mode particulier de mise en oeuvre du procédé de la figure 2 au cours duquel, lorsqu'une anomalie est détectée, le procédé comporte une étape 450 de confirmation et / ou d'isolation matérielle de ladite anomalie.

Tel qu'illustré par la figure 3, l'étape 450 de confirmation et / ou d'isolation matérielle de ladite anomalie est réalisée avant la génération du message de maintenance. Cette étape 450 comprend des échanges d'informations relatives au modèle courant entre l'aéronef et une entité au sol.

Dans ce mode de mise en oeuvre, les échanges s'effectuent entre le dispositif de traitement 12 et ladite entité au sol.

Par exemple, l'entité au sol est un dispositif de type PC, détenu et manipulé par un opérateur de maintenance appartenant au motoriste, et comportant des moyens de communication avec l'aéronef pour recevoir le modèle courant déterminé. Rien n'exclut que ladite entité au sol soit confondue avec ledit dispositif récepteur 14 au sol.

A réception dudit modèle courant, l'opérateur de maintenance peut consulter un catalogue répertoriant des signatures de dégradation, par exemple stocké dans une mémoire du dispositif de type PC qu'il manipule, pour confirmer l'anomalie détectée, ou bien encore déclencher une procédure d'isolation de panne en cas d'ambiguïté sur le ou les éléments matériels responsables de l'anomalie détectée.

Une fois l'anomalie confirmée ou précisée par l'opérateur de maintenance, celui-ci peut renvoyée l'information concernant l'anomalie, via les moyens de communication du dispositif qu'il manipule, vers le dispositif de traitement 12, afin que cette information figure dans le message de maintenance (par exemple par incorporation dans ledit rapport de maintenance) qui sera généré au cours de l'étape 500.

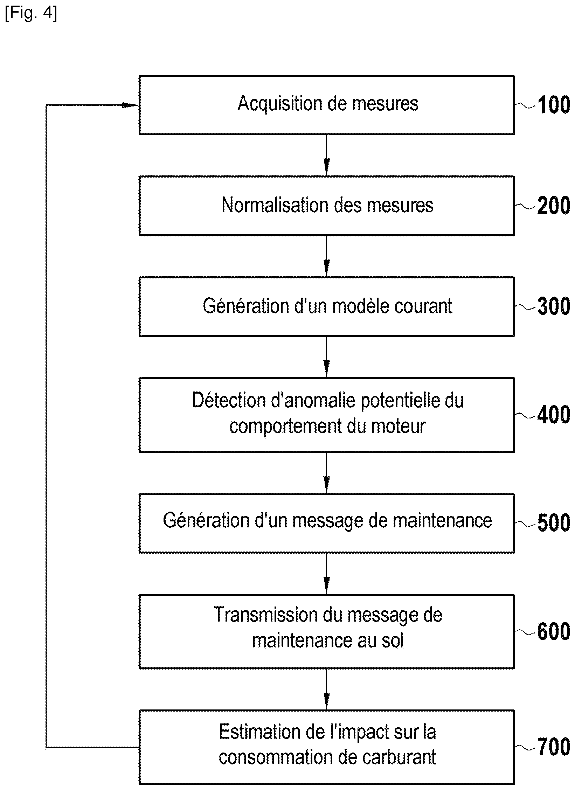

La figure 4 représente un mode particulier de mise en oeuvre du procédé de la figure 2 au cours duquel, lorsque qu'une anomalie a été détectée et qu'un rapport comportant au moins une opération de maintenance relative à ladite anomalie a été généré, une étape 700 d'estimation de l'impact du non suivi de ladite opération de maintenance sur la consommation de carburant du moteur est effectuée.

Tel qu'illustré par la figure 4, l'étape 700 d'estimation est réalisée après que le message de maintenance a été transmis vers le dispositif récepteur 14 au sol. Autrement dit, l'estimation réalisée constitue une information additionnelle transmise séparément du message de maintenance.

Rien n'exclut cependant de considérer que l'étape 700 d'estimation soit effectuée après la génération du rapport mais avant sa transmission. Dans ce cas, l'estimation de l'impact du non suivi de l'opération de maintenance sur la consommation de carburant est par exemple intégrée au message de maintenance (voire au rapport de maintenance le cas échéant) dans une mise à jour de ce dernier.

Selon un exemple de mise en oeuvre, ladite estimation est réalisée par le dispositif de traitement 12 au cours de la mission de vol. A cet effet, le dispositif de traitement 12 exécute des calculs d'estimation de la consommation de carburant en considérant un scénario dans lequel aucune opération de maintenance n'est appliquée pour traiter l'anomalie détectée.

Lesdits calculs prennent en considération une pluralité de paramètres, comme par exemple la quantité de carburant restante dans le réservoir du moteur, une consommation moyenne de carburant renseignée dans une documentation technique associée au moteur, etc.

Cette estimation est ensuite transmise au dispositif récepteur 14 au sol, où un opérateur de maintenance détermine s'il faut effectivement envisager l'opération de maintenance telle que préconisée dans le message de maintenance. Autrement dit, l'estimation déterminée au cours de l'étape 700 constitue une assistance à la décision pour l'opérateur de maintenance.

En alternative, ou bien en complément d'une transmission vers le dispositif récepteur 14 au sol, ladite estimation est transmise vers le cockpit de sorte à informer le personnel naviguant qui peut dès lors évaluer la gravité de l'anomalie, et donc prendre des décisions en conséquence, telles qu'une modification de la trajectoire de l'avion, un ralentissement du régime moteur, etc. On comprend en effet que l'estimation obtenue dans l'étape 700 constitue une information facilement compréhensible et interprétable.

Selon un autre exemple de mise en oeuvre, l'estimation de l'impact du non suivi de l'opération de maintenance sur la consommation de carburant est réalisée par une pompe de carburant intégrée au moteur. Dans cet exemple, ladite pompe comporte des moyens de traitement configurés pour réaliser des calculs de l'estimation. La pompe comporte en outre des moyens de communication, filaires ou non filaires, configurés pour transmettre l'estimation vers le dispositif récepteur 14 au sol et / ou le cockpit et / ou le dispositif de traitement 12.

Il est à noter que le mode de mise en oeuvre de la figure 4 est combinable avec tous les modes de mise en oeuvre précédemment mentionnés, comme par exemple celui de la figure 3.

De manière plus générale, il faut noter que tous les modes de mises en oeuvre considérés ci-dessus ont été décrits à titre d'exemples non limitatifs, et que d'autres variantes sont par conséquent envisageables.

Notamment, l'invention a été décrite en considérant une surveillance d'un des moteurs de la paire intégrée à l'aéronef. Il apparaitra clairement qu'une telle surveillance s'applique de manière identique à l'autre moteur de l'aéronef, par exemple au moyen d'un dispositif de traitement 12 commun auxdits moteurs de la paire, ou bien encore au moyen de deux dispositifs de traitements respectifs desdits moteurs. Autrement dit, au moins les étapes d'acquisition 100, de normalisation 200, de génération 300 d'un modèle courant, de détection 400 d'anomalies potentielles, de génération 500 d'un message de maintenance et de transmission 600 dudit rapport sont exécutées pour chaque moteur de la paire. Bien entendu, les étapes décrites dans les figures 3 et 4 peuvent également être exécutées pour chacun des moteurs de la paire.

Plus largement, aucune limitation n'est attachée au nombre de moteurs équipant l'aéronef ni au nombre de dispositifs de traitement 12 associés à ces moteurs. Aucune limitation n'est non plus attachée à la manière dont sont effectuées les surveillances respectives des moteurs. Par exemple, ces surveillances respectives sont avantageusement effectuées en parallèle, de sorte à surveiller les moteurs de manière simultanée. Toutefois, rien n'exclut de considérer des surveillances séquentielles de chacun des moteurs.

Par ailleurs, lorsque l'aéronef comporte au moins une paire de moteurs identiques, l'étape 400 de détection d'anomalie potentielle associée à un moteur peut avantageusement comporter une comparaison des modèles courants respectivement associés aux moteurs de la paire. Procédé de cette manière permet de réaliser une surveillance croisée des comportements des moteurs de la paire. Or, comme ces moteurs sont identiques, il est attendu que leurs comportements respectifs le soient également au cours de la mission de vol. Par conséquent, le fait de comparer entre eux les modèles courants respectifs des moteurs permet d'accroitre la fiabilité du diagnostic final fourni dans les messages de maintenance de chacun des moteurs.

A titre d'exemple, la comparaison du modèle courant d'un premier moteur avec le modèle courant d'un deuxième moteur de la paire est effectuée après la comparaison du modèle courant du premier moteur avec le modèle de référence. Alternativement, la comparaison croisée entre les modèles courants respectifs des moteurs est réalisée avant toute comparaison avec un modèle de référence.

En outre, le présent procédé de surveillance a été décrit en considérant que les étapes de normalisation 200, de génération 300 d'un modèle courant, de détection 400 d'anomalies potentielles, de génération 500 d'un message de maintenance et de transmission 600 dudit rapport étaient exécutées après que des mesures aient été acquises pendant une mission de vol de l'aéronef.

Rien n'exclut toutefois de considérer d'autres modes de mise en oeuvre du procédé de surveillance. Par exemple, il est possible de considérer qu'au moins les étapes de normalisation 200, de génération 300 d'un modèle courant et de détection 400 sont itérées pour chaque acquisition d'une mesure d'au moins le premier ensemble. Les éventuelles anomalies détectées peuvent alors être mémorisées pour ensuite être regroupées dans un seul message de maintenance transmis vers le sol.

De manière complémentaire, l'étape 500 de génération d'un message de maintenance peut également être exécutée pour chaque acquisition d'une mesure d'au moins le premier ensemble.

Dans un autre mode de mise en oeuvre, une pluralité de missions de vol sont considérées. Autrement dit, il est prévu que le procédé de surveillance soit exécuté au cours de chacune desdites missions de vol. En outre, dans ce mode, les mesures des premier et second ensembles associées à une mission de vol sont acquises au cours d'au moins une phase prédéterminée commune à ladite pluralité de missions de vol. Procéder ainsi permet d'harmoniser le contexte d'acquisition des mesures, facilitant ainsi le suivi de l'état du moteur de vol à vol. Autrement dit, le fait de cibler au moins une phase prédéterminée de la mission de vol permet de créer un contexte répétable entre différentes missions de vols de l'aéronef. A titre d'exemple nullement limitatif, pour chaque mission de vol, les mesures sont acquises au cours du décollage et de l'atterrissage.

Dans encore un autre mode de mise en oeuvre, le procédé de surveillance est exécuté de manière périodique toutes les N missions de vol, N étant un nombre supérieur ou égal à 1. Par exemple, le procédé est exécuté toutes les cinq missions de vol, à chaque fois au cours d'une même phase de la mission. On comprend en outre que si N est égal à 1, cela signifie que le procédé est exécuté à chaque mission de vol de l'aéronef.

Le choix entre ces modes d'exécution résulte, notamment, d'un compromis entre ressources de calculs (plus le pas de temps entre chaque acquisition est petit, plus les ressources de calcul à considérer sont importantes) et la fréquence de surveillance désirée.

Enfin, l'invention telle que décrite ci-avant n'exclut nullement la possibilité d'une mise en oeuvre d'un système de surveillance additionnel comportant un dispositif de traitement au sol. Dans ce cas, ce système de surveillance additionnel comporte des moyens d'acquisition à bord de l'aéronef, avantageusement communs à ceux de l'invention, les mesures acquises étant ensuite transmises au sol pour être traitées. Le fait d'utiliser un système de surveillance additionnel de ce type constitue une sécurité dans le cas où le dispositif de traitement embarqué dans l'aéronef subit une défaillance.

## Revendications

1. Procédé de surveillance d'au moins un moteur d'aéronef, ledit procédé comportant, lors d'au moins une mission de vol de l'aéronef, une étape (100) d'acquisition de mesures selon deux ensembles, un premier ensemble de mesures de variables endogènes représentatives du comportement du moteur, et un second ensemble de mesures de variables exogènes représentatives du contexte d'acquisition, ledit procédé étant **caractérisé en ce qu'**il comporte en outre, lors de la mission de vol, les étapes suivantes :
- une étape (200) de normalisation des mesures du premier ensemble par rapport aux mesures du second ensemble,
- une étape (300) de génération d'un modèle courant représentatif de l'évolution temporelle du comportement du moteur en fonction des mesures normalisées,
- une étape (400) de détection d'au moins une anomalie potentielle du comportement du moteur en fonction d'une comparaison du modèle courant avec un modèle de référence prédéfini représentatif du comportement du moteur dénué d'anomalie, le modèle de référence ayant été déterminé en fonction de M modèles courants obtenus lors de missions de vol antérieures à la mission de vol considérée et au cours desquelles aucune anomalie n'a été détectée, M étant un nombre supérieur ou égal à 1, et
- si une anomalie est détectée, une étape (500) de génération d'un message de maintenance comportant une alerte basée sur l'anomalie détectée ainsi que des préconisations de maintenance ou des opérations de maintenance associées à ladite alerte,
- une étape (600) de transmission du message de maintenance vers au moins un dispositif (14) récepteur au sol,
les étapes d'acquisition (100), de normalisation (200), de génération (300) d'un modèle courant, de détection (400) et de génération (500) d'un message de maintenance étant réalisées à bord de l'aéronef.

2. Procédé selon la revendication 1, dans lequel l'étape (200) de normalisation comporte :
- une sélection et/ou un filtrage des mesures du premier ensemble, de sorte à supprimer des mesures aberrantes situées en dehors d'intervalles respectifs prédéterminés,
- une normalisation des mesures filtrées du premier ensemble par rapport aux mesures du second ensemble.

3. Procédé selon l'une quelconque des revendications 1 à 2, dans lequel, lorsque M est strictement supérieur à 1, le modèle de référence est déterminé en fonction d'une moyenne, d'une médiane ou d'une pondération desdits M modèles courants antérieurs.

4. Procédé selon l'une quelconque des revendications 1 à 3, dans lequel l'étape (400) de détection d'au moins une anomalie potentielle comporte :
- une détermination d'une tendance d'évolution du modèle courant,
- une comparaison de la tendance d'évolution du modèle courant avec l'évolution temporelle du modèle de référence, de sorte à identifier une déviation potentielle du modèle courant avec le modèle de référence,
- une détection d'au moins une anomalie en fonction de ladite déviation potentielle.

5. Procédé selon l'une quelconque des revendications 1 à 4, dans lequel, lorsqu'une anomalie est détectée, ledit procédé comporte, avant la génération du message de maintenance, une étape (450) de confirmation et / ou d'isolation matérielle de ladite anomalie comprenant des échanges d'informations relatives au modèle courant entre l'aéronef et une entité au sol.

6. Procédé selon l'une quelconque des revendications 1 à 5, dans lequel le dispositif récepteur (14) au sol est choisi parmi au moins : un PC, un smartphone, une tablette, un drone, des lunettes de réalité augmentée.

7. Procédé selon l'une quelconque des revendications 1 à 6, dans lequel le message de maintenance est également transmis vers des moyens d'affichage du cockpit de l'aéronef.

8. Procédé selon l'une quelconque des revendications 1 à 7, ledit procédé comportant, lorsqu'une anomalie a été détectée et qu'un message comportant au moins une opération de maintenance relative à ladite anomalie a été généré, une étape (700) d'estimation de l'impact du non suivi de ladite opération de maintenance sur la consommation de carburant du moteur.

9. Procédé selon l'une quelconque des revendications 1 à 8, dans lequel au moins les étapes de normalisation (200), de génération (300) d'un modèle courant et de détection (400) d'au moins une anomalie potentielle sont itérées pour chaque acquisition d'une mesure d'au moins le premier ensemble.

10. Procédé selon l'une quelconque des revendications 1 à 8, dans lequel une pluralité de missions de vol est considérée, les mesures des premier et second ensembles associées à une mission de vol étant acquises au cours d'au moins une phase prédéterminée commune à ladite pluralité de missions de vol.

11. Procédé selon l'une quelconque des revendications 1 à 10, ledit procédé étant exécuté de manière périodique toutes les N missions de vol, N étant un nombre supérieur ou égal à 1.

12. Procédé selon l'une quelconque des revendications 1 à 11, dans lequel l'aéronef comporte au moins une paire de moteurs identiques, au moins les étapes d'acquisition (100), de normalisation (200), de génération (300) d'un modèle courant, de détection (400) d'au moins une anomalie potentielle, de génération (500) d'un message de maintenance et de transmission (600) dudit message étant exécutées pour chaque moteur de la paire, l'étape de détection (400) d'au moins une anomalie potentielle associée à un moteur comportant en outre une comparaison des modèles courants respectivement associés aux moteurs de la paire.

13. Programme d'ordinateur comportant un ensemble d'instructions de code de programme qui, lorsqu'elles sont exécutées par un processeur, configurent ledit processeur pour mettre en oeuvre des étapes de normalisation (200), de génération (300) d'un modèle courant, de détection (400) d'au moins une anomalie potentielle et de génération (500) d'un message de maintenance d'un procédé de surveillance selon l'une quelconque des revendications 1 à 12.

14. Support d'enregistrement lisible par un ordinateur sur lequel est enregistré un programme d'ordinateur selon la revendication 13.

15. Dispositif (12) de traitement destiné à être embarqué dans un aéronef comportant des moyens d'acquisition (11) configurés pour acquérir lors d'au moins une mission de vol des mesures selon deux ensembles, un premier ensemble de mesures de variables endogènes représentatives du comportement d'un moteur de l'aéronef, et un second ensemble de mesures de variables exogènes représentatives du contexte d'acquisition, ledit dispositif (12) de traitement comportant :
- un module de normalisation, configuré pour normaliser les mesures du premier ensemble par rapport aux mesures du second ensemble,
- un module de génération, configuré pour générer un modèle courant représentatif de l'évolution temporelle du comportement du moteur en fonction des mesures normalisées,
- un module de détection, configuré pour détecter au moins une anomalie potentielle du comportement du moteur en fonction d'une comparaison du modèle courant avec un modèle de référence prédéfini représentatif du comportement du moteur dénué d'anomalie, le modèle de référence ayant été déterminé en fonction de M modèles courants obtenus lors de missions de vol antérieures à la mission de vol considérée et au cours desquelles aucune anomalie n'a été détectée, M étant un nombre supérieur ou égal à 1,
- un module de génération, configuré pour générer un message de maintenance comportant une alerte basée sur une anomalie détectée ainsi que des préconisations de maintenance ou des opérations de maintenance associées à ladite alerte.

16. Système (10) de surveillance d'au moins un moteur d'aéronef, ledit système (10) comportant :
- des moyens d'acquisition (11) destinés à être embarqués dans l'aéronef et configurés pour acquérir lors d'au moins une mission de vol des mesures selon deux ensembles, un premier ensemble de mesures de variables endogènes représentatives du comportement du moteur, et un second ensemble de mesures de variables exogènes représentatives du contexte d'acquisition,
- un dispositif (12) de traitement selon la revendication 15,
- au moins un dispositif récepteur (14) au sol,
- des moyens de communication configurés pour au moins transmettre un message de maintenance généré par le dispositif (12) de traitement vers le dispositif récepteur (14) au sol.

17. Aéronef comportant :
- des moyens d'acquisition (11) configurés pour acquérir lors d'au moins une mission de vol des mesures selon deux ensembles, un premier ensemble de mesures de variables endogènes représentatives du comportement du moteur, et un second ensemble de mesures de variables exogènes représentatives du contexte d'acquisition,
- un dispositif (12) de traitement selon la revendication 15,
- des moyens de communication configurés pour au moins transmettre un message de maintenance généré par le dispositif (12) de traitement vers au moins un dispositif récepteur (14) au sol.

## Patentansprüche

1. Verfahren zur Überwachung mindestens eines Flugzeugtriebwerks, wobei das Verfahren bei mindestens einer Flugmission des Flugzeugs einen Schritt (100) des Erfassens von Messungen in zwei Gruppen, einer ersten Gruppe Messungen endogener Variablen, die für das Verhalten des Triebwerks repräsentativ sind, und einer zweiten Gruppe Messungen exogener Variablen, die für den Erfassungskontext repräsentativ sind, aufweist, wobei das Verfahren **dadurch gekennzeichnet ist, dass** es ferner bei der Flugmission die folgenden Schritte aufweist:
- einen Schritt (200) des Standardisierens der Messungen der ersten Gruppe im Verhältnis zu den Messungen der zweiten Gruppe,
- einen Schritt (300) des Erzeugens eines laufenden Modells, das für die zeitliche Entwicklung des Verhaltens des Triebwerks in Abhängigkeit von den standardisierten Messungen repräsentativ ist,
- einen Schritt (400) des Ermittelns mindestens einer potentiellen Anomalie des Verhaltens des Triebwerks in Abhängigkeit von einem Vergleich des laufenden Modells mit einem vorher festgelegten Referenzmodell, das für das Verhalten des Triebwerks ohne Anomalie repräsentativ ist, wobei das Referenzmodell in Abhängigkeit von M laufenden Modellen bestimmt wird, die bei früheren Flugmissionen als die betrachtete Flugmission erhalten wurden und bei denen keine Anomalie ermittelt wurde, wobei M eine Zahl größer oder gleich 1 ist, und
- wenn eine Anomalie ermittelt wird, einen Schritt (500) des Erzeugens einer Wartungsnachricht, die eine Warnung aufweist, die auf der ermittelten Anomalie basiert, sowie Wartungsempfehlungen oder der Warnung zugeordnete Wartungsmaßnahmen,
- einen Schritt (600) des Übertragens der Wartungsnachricht an mindestens eine Bodenempfangsvorrichtung (14),
wobei die Schritte des Erfassens (100), des Standardisierens (200), des Erzeugens (300) eines laufenden Modells, des Ermittelns (400) und des Erzeugens (500) einer Wartungsnachricht an Bord des Flugzeugs durchgeführt werden.

2. Verfahren nach Anspruch 1, wobei der Schritt (200) des Standardisierens aufweist:
- eine Auswahl und/oder eine Filterung der Messungen der ersten Gruppe, so dass ungewöhnliche Messungen entfernt werden, die sich außerhalb jeweiliger vorher festgelegter Intervalle befinden,
- eine Standardisierung der gefilterten Messungen der ersten Gruppe im Verhältnis zu den Messungen der zweiten Gruppe.

3. Verfahren nach einem der Ansprüche 1 bis 2, wobei, wenn M strikt größer als 1 ist, das Referenzmodell in Abhängigkeit von einem Mittel, einem Median oder einer Gewichtung der M früheren laufenden Modelle bestimmt wird.

4. Verfahren nach einem der Ansprüche 1 bis 3, wobei der Schritt (400) des Ermittelns mindestens einer potentiellen Anomalie aufweist:
- eine Bestimmung eines Entwicklungstrends des laufenden Modells,
- einen Vergleich des Entwicklungstrends des laufenden Modells mit der zeitlichen Entwicklung des Referenzmodells, so dass eine potentielle Abweichung des laufenden Modells mit dem Referenzmodell identifiziert wird,
- eine Ermittlung mindestens einer Anomalie in Abhängigkeit von der potentiellen Abweichung.

5. Verfahren nach einem der Ansprüche 1 bis 4, wobei, wenn eine Anomalie ermittelt wird, das Verfahren vor der Erzeugung einer Wartungsnachricht einen Schritt (450) des Bestätigens und/oder des materiellen Isolierens der Anomalie aufweist, der Austausche von Informationen, die sich auf das laufende Modell beziehen, zwischen dem Flugzeug und einer Bodeneinheit umfasst.

6. Verfahren nach einem der Ansprüche 1 bis 5, wobei die Empfangsvorrichtung (14) am Boden aus mindestens einem PC, einem Smartphone, einem Tablet, einer Drohne, einer Augmented Reality-Brille ausgewählt ist.

7. Verfahren nach einem der Ansprüche 1 bis 6, wobei die Wartungsnachricht ebenfalls an Anzeigemittel des Cockpits des Flugzeugs übertragen wird.

8. Verfahren nach einem der Ansprüche 1 bis 7, wobei das Verfahren, wenn eine Anomalie ermittelt wurde und eine Nachricht, die mindestens eine Wartungsmaßnahme aufweist, die sich auf die Anomalie bezieht, erzeugt wurde, einen Schritt (700) des Schätzens der Auswirkungen der Nichtbeachtung der Wartungsmaßnahme auf den Treibstoffverbrauch des Triebwerks aufweist.

9. Verfahren nach einem der Ansprüche 1 bis 8, wobei mindestens die Schritte des Standardisierens (200), des Erzeugens (300) eines laufenden Modells und des Ermittelns (400) mindestens einer potentiellen Anomalie für jede Erfassung einer Messung mindestens der ersten Gruppe wiederholt werden.

10. Verfahren nach einem der Ansprüche 1 bis 8, wobei eine Vielzahl von Flugmissionen berücksichtigt wird, wobei die Messungen der ersten und zweiten Gruppe, die einer Flugmission zugeordnet sind, während mindestens einer vorher festgelegten Phase erfasst werden, die der Vielzahl von Flugmissionen gemeinsam ist.

11. Verfahren nach einem der Ansprüche 1 bis 10, wobei das Verfahren periodisch alle N Flugmissionen durchgeführt wird, wobei N eine Zahl größer oder gleich 1 ist.

12. Verfahren nach einem der Ansprüche 1 bis 11 wobei das Flugzeug mindestens ein Paar identischer Triebwerke aufweist, wobei mindestens die Schritte des Erfassens (100), des Standardisierens (200), des Erzeugens (300) eines laufenden Modells, des Ermittelns (400) mindestens einer potentiellen Anomalie, des Erzeugens (500) einer Wartungsnachricht und des Übermittelns (600) der Nachricht für jedes Triebwerk des Paars durchgeführt werden, wobei der Schritt des Ermittelns (400) mindestens einer potentiellen Anomalie in Verbindung mit einem Triebwerk ferner einen Vergleich der laufenden Modelle aufweist, die jeweils den Triebwerken des Paars zugeordnet sind.

13. Rechnerprogramm, das eine Gruppe von Programmcodebefehlen aufweist, die, wenn sie von einem Prozessor ausgeführt werden, den Prozessor konfigurieren, um Schritte des Standardisierens (200), des Erzeugens (300) eines laufenden Modells, des Ermittelns (400) mindestens einer potentiellen Anomalie und des Erzeugens (500) einer Wartungsnachricht eines Überwachungsverfahren nach einem der Ansprüche 1 bis 13 durchzuführen.

14. Rechnerlesbares Speichermedium, auf dem ein Rechnerprogramm nach Anspruch 13 gespeichert ist.

15. Verarbeitungsvorrichtung (12), die zum Einbau in ein Flugzeug bestimmt ist, aufweisend Erfassungsmittel (11), die ausgelegt sind, um bei mindestens einer Flugmission Messungen in zwei Gruppen zu erfassen, in einer ersten Gruppe Messungen endogener Variablen, die für das Verhalten eines Triebwerk des Flugzeugs repräsentativ sind, und in einer zweiten Gruppe Messungen exogener Variablen, die für den Erfassungskontext repräsentativ sind, wobei die Verarbeitungsvorrichtung (12) aufweist:
- ein Standardisierungsmodul, das ausgelegt ist, um die Messungen der ersten Gruppe im Verhältnis zu den Messungen der zweiten Gruppe zu standardisieren,
- ein Erzeugungsmodul, das ausgelegt ist, um ein laufendes Modell zu erzeugen, das für die zeitliche Entwicklung des Verhaltens des Triebwerks in Abhängigkeit von den standardisierten Messungen repräsentativ ist,
- ein Ermittlungsmodul, das ausgelegt ist, um mindestens eine potentielle Anomalie des Verhaltens des Triebwerks in Abhängigkeit von einem Vergleich des laufenden Modells mit einem vorher festgelegten Referenzmodell zu ermitteln, das für das Verhalten des Triebwerks ohne Anomalie repräsentativ ist, wobei das Referenzmodell in Abhängigkeit von M laufenden Modellen bestimmt wird, die bei früheren Flugmissionen als die betrachtete Flugmission erhalten wurden und bei denen keine Anomalie ermittelt wurde, wobei M eine Zahl größer oder gleich 1 ist, und
- ein Erzeugungsmodul, das ausgelegt ist, um eine Wartungsnachricht zu erzeugen, die eine Warnung aufweist, die auf der ermittelten Anomalie basiert, sowie Wartungsempfehlungen oder der Warnung zugeordnete Wartungsmaßnahmen.

16. System (10) zur Überwachung mindestens eines Flugzeugtriebwerks, wobei das System (10) aufweist:
- Erfassungsmittel (11), die zum Einbau in ein Flugzeug bestimmt sind und ausgelegt, um bei mindestens einer Flugmission Messungen in zwei Gruppen zu erfassen, in einer ersten Gruppe Messungen endogener Variablen, die für das Verhalten eines Triebwerk des Flugzeugs repräsentativ sind, und in einer zweiten Gruppe Messungen exogener Variablen, die für den Erfassungskontext repräsentativ sind,
- eine Verarbeitungsvorrichtung (12) nach Anspruch 15,
- mindestens eine Bodenempfangsvorrichtung (14),
- Kommunikationsmittel, die ausgelegt sind, um mindestens eine Wartungsnachricht, die von der Verarbeitungsvorrichtung (12) erzeugt, wurde, an die Bodenempfangsvorrichtung (14) zu übertragen.

17. Flugzeug, das aufweist:
- Erfassungsmittel (11), die ausgelegt sind, um bei mindestens einer Flugmission Messungen in zwei Gruppen zu erfassen, in einer ersten Gruppe Messungen endogener Variablen, die für das Verhalten eines Triebwerk des Flugzeugs repräsentativ sind, und in einer zweiten Gruppe Messungen exogener Variablen, die für den Erfassungskontext repräsentativ sind,
- eine Verarbeitungsvorrichtung (12) nach Anspruch 15,
- Kommunikationsmittel, die ausgelegt sind, um mindestens eine Wartungsnachricht, die von der Verarbeitungsvorrichtung (12) erzeugt, wurde, an die Bodenempfangsvorrichtung (14) zu übertragen.

## Claims

1. A method for monitoring at least one aircraft engine, said method including, during at least one flight mission of the aircraft, a step (100) of acquiring measurements according to two sets, a first set of measurements of endogenous variables representative of the behavior of the engine, and a second set of measurements of exogenous variables representative of the acquisition context, said method being **characterized in that** it further includes, during the flight mission, the following steps:
- a step (200) of normalizing the measurements of the first set relative to the measurements of the second set,
- a step (300) of generating a current model representative of the time evolution of the behavior of the engine based on the normalized measurements,
- a step (400) of detecting at least one potential abnormality in the behavior of the engine based on a comparison of the current model with a predefined reference model representative of the behavior of the engine free of abnormality, wherein the reference model has been determined based on M current models obtained during flight missions prior to the considered flight mission and during which no abnormality has been detected, for example during flight missions following the set-up of the engine, M being a number greater than or equal to 1, and
- if an abnormality is detected, a step (500) of generating a maintenance message including an alert based on the detected abnormality as well as maintenance recommendations or maintenance operations associated with said alert,
- a step (600) of transmitting the maintenance message to at least one receiving device (14) on the ground,
the steps of acquiring (100), normalizing (200), generating (300) a current model, of detecting (400) and generating (500) a maintenance message being carried out on board the aircraft.

2. The method according to claim 1, wherein the normalization step (200) includes:
- a selection and/or a filtering of the measurements of the first set, so as to remove outlier measurements located outside predetermined respective intervals,
- a normalization of the filtered measurements of the first set relative to the measurements of the second set.

3. The method according to any one of claims 1 to 2, wherein, when M is strictly greater than 1, the reference model is determined based on a mean, a median or a weighting of said M previous current models.

4. The method according to any one of claims 1 to 3, wherein the step (400) of detecting at least one potential abnormality includes:
- a determination of a trend of evolution of the current model,
- a comparison of the trend of evolution of the current model with the time evolution of the reference model, so as to identify a potential deviation of the current model with the reference model,
- a detection of at least one abnormality based on said potential deviation.

5. The method according to any one of claims 1 to 4, wherein, when an abnormality is detected, said method includes, before the generation of the maintenance message, a step (450) of confirming and/or materially isolating said abnormality comprising exchanges of information relating to the current model between the aircraft and an entity on the ground.

6. The method according to any one of claims 1 to 5, wherein the receiving device (14) on the ground is chosen among at least: a PC, a Smartphone, a tablet, a drone, augmented reality glasses.

7. The method according to any one of claims 1 to 6, wherein the maintenance message is also transmitted to display means of the cockpit of the aircraft.

8. The method according to any one of claims 1 to 7, said method including, when an abnormality has been detected and when a message including at least one maintenance operation relating to said abnormality has been generated, a step (700) of estimating the impact of the absence of tracking said maintenance operation on the fuel consumption of the engine.

9. The method according to any one of claims 1 to 8, wherein at least the steps of normalizing (200), generating (300) a current model and of detecting (400) at least one potential abnormality are iterated for each acquisition of a measurement of at least the first set.

10. The method according to any one of claims 1 to 8, wherein a plurality of flight missions is considered, the measurements of the first and second sets associated with a flight mission being acquired during at least one predetermined phase common to said plurality of flight missions.

11. The method according to any one of claims 1 to 10, said method being executed periodically every N flight missions, N being a number greater than or equal to 1.

12. The method according to any one of claims 1 to 11, wherein the aircraft includes at least one pair of identical engines, at least the steps of acquiring (100), normalizing (200), generating (300) a current model, of detecting (400) at least one potential abnormality, of generating (500) a maintenance message and of transmitting (600) said message being executed for each engine of the pair, the step of detecting (400) at least one potential abnormality associated with an engine further including a comparison of the current models respectively associated with the engines of the pair.

13. A computer program including a set of program code instructions which, when executed by a processor, configure said processor to implement steps of normalizing (200), generating (300) a current model, of detecting (400) at least one potential abnormality and of generating (500) a maintenance message of a monitoring method according to any one of claims 1 to 12.

14. A computer-readable recording medium on which a computer program according to claim 13 is recorded.

15. A processing device (12) intended to be on board an aircraft including acquisition means (11) configured to acquire, during at least one flight mission, measurements according to two sets, a first set of measurements of endogenous variables representative of the behavior of an engine of the aircraft, and a second set of measurements of exogenous variables representative of the acquisition context, said processing device (12) including:
- a normalization module configured to normalize the measurements of the first set relative to the measurements of the second set,
- a generation module configured to generate a current model representative of the time evolution of the behavior of the engine based on the normalized measurements,
- a detection module configured to detect at least one potential abnormality in the behavior of the engine based on a comparison of the current model with a predefined reference model representative of the behavior of the engine free of abnormality the reference model having been determined based on M current models obtained during flight missions prior to the considered flight mission and during which no abnormality has been detected, for example during flight missions following the set-up of the engine, M being a number greater than or equal to 1,
- a generation module configured to generate a maintenance message including an alert based on a detected abnormality as well as maintenance recommendations or maintenance operations associated with said alert.

16. A system (10) for monitoring at least one aircraft engine, said system (10) including:
- acquisition means (11) intended to be on board the aircraft and configured to acquire, during at least one flight mission, measurements according to two sets, a first set of measurements of endogenous variables representative of the behavior of the engine, and a second set of measurements of exogenous variables representative of the acquisition context,
- a processing device (12) according to claim 15,
- at least one receiving device (14) on the ground,
- communication means configured to at least transmit a maintenance message generated by the processing device (12) to the receiving device (14) on the ground.

17. An aircraft including:
- acquisition means (11) configured to acquire, during at least one flight mission, measurements according to two sets, a first set of measurements of endogenous variables representative of the behavior of the engine, and a second set of measurements of exogenous variables representative of the acquisition context,
- a processing device (12) according to claim 15,
- communication means configured to at least transmit a maintenance message generated by the processing device (12) to at least one receiving device (14) on the ground
